# EUROPEAN PATENT APPLICATION

(11) **EP 4 692 879 A1**
(43) Date of publication of application: **11.02.2026**
(21) Application number: 24193851.3
(22) Date of filing: 09.08.2024
(51) Int. Cl.: G02B 6/42

(54) **OPTICAL COUPLING ASSEMBLY**

(71) Applicant: Fraunhofer-Gesellschaft zur Förderung der angewandten Forschung e.V., 80686 München (DE)
(72) Inventor: RUNGE, Dr. Patrick, 14193 Berlin (DE); GANZER, BSc. Felix, 15738 Zeuthen (DE)
(74) Representative: Maikowski & Ninnemann Patentanwälte Partnerschaft mbB

(57) **Abstract**

The invention relates to an optical coupling assembly (1), comprising at least one optical fiber (2); an optical unit (3) configured to receive light from the optical fiber (2) and/or to emit light to be coupled into the optical fiber (2); a temperature adjusting element (4) configured to adjust a temperature of the optical unit (3); at least one fiber holder (5) on which the optical fiber (2) is mounted in such way that a at least a portion of an optical path between an ending (21) of the optical fiber (2) and the optical unit (3) is a free beam region, wherein the fiber holder (5) is bonded to at least one portion of the optical unit (3) and/or the temperature adjusting element (4), the at least one portion extending along or in a plane which is orientated perpendicular or obliquely at angle to an optical axis (A) of the optical unit (3).

## Description

The invention relates to an optical coupling assembly according claim 1.

Optical assemblies providing an optical coupling between an optical fiber and an optical chip receiving light from the optical fiber and/or emitting light to be coupled into the optical fiber may comprise a thermoelectric cooler (TEC) for cooling the optical chip. The optical coupling between the optical fiber and the optical chip, however, may be affected by temperature changes invoked by the operation of the thermoelectric cooler, e.g., due to a relative movement between the optical fiber and the optical chip. In particular, high-performance active optical components (such as vertically illuminated photodiodes or VCSELs) have a small optical window for receiving or emitting light. The mode field diameter (MFD) of such components may be small such that the adjustment tolerance also tends to be small. A decrease of the coupling efficiency may therefore result from temperature changes produced by the TEC. For larger components this effect may be minimal, but the smaller the MFDs, the greater the decrease of the coupling efficiency. To prevent a decrease of the coupling efficiency, the optical fiber may be glued to the optical chip. This may be disadvantageous in terms of module reliability and also a coupling of tapered or lensed optical fibers to obtain smaller mode field diameters may not possible because the refractive index of the common glues is similar to the one of the glass fiber materials.

It is an object of the invention to provide a compact and reliable optical coupling assembly.

According to the invention, an optical coupling assembly is provided, the optical coupling assembly comprising:
- at least one optical fiber;
- an optical unit configured to receive light from the optical fiber and/or to emit light to be coupled into the optical fiber;
- a temperature adjusting element configured to adjust a temperature of the optical unit;
- at least one fiber holder on which the optical fiber is mounted in such a way that at least a portion of an optical path between an ending of the optical fiber and the optical unit is a free beam region,
- wherein the fiber holder is bonded to at least one portion of the optical unit and/or the temperature adjusting element, the at least one portion extending along or in a plane which is orientated perpendicular or obliquely at angle to an optical axis of the optical unit.

The fiber holder may be bonded to the at least one portion of the optical unit and/or the temperature adjusting element by means of a glue or another suited bonding means. In particular, the bonding of the fiber holder to the optical unit and/or the temperature adjusting element is carried out in such a way that a precise and stable optical coupling between the ending of the optical fiber and the optical unit is realized. The at least one portion of the optical unit and/or the temperature adjusting element to which the fiber holder is bonded may be formed by a surface section of the optical unit and/or the temperature adjusting element. More particularly, the fiber holder may be bonded to a plurality of portions of the optical unit and/or the temperature adjusting element, wherein all of the plurality of portions extend along the plane which is orientated perpendicular or at angle to an optical axis of the optical unit. In other words, the portions of the optical unit and/or the temperature adjusting element to which the fiber holder is bonded are located along (or in) a common plane orientated perpendicular or at angle to an optical axis of the optical unit. The claimed orientation of the at least one portion of the optical unit and/or the temperature adjusting element to which the fiber holder is bonded may allow a compact design of the optical coupling assembly.

The fiber holder may be bonded only to the at least one portion of the optical unit and/or the temperature adjusting element extending along or in a plane which is orientated perpendicular or obliquely at angle to an optical axis of the optical unit. For example, the fiber holder is bonded only to a plurality of portions of the optical unit and/or the temperature adjusting element extending along or in a plane which is orientated perpendicular or obliquely at angle to an optical axis of the optical unit.

The angle between a normal of the plane along which or in which the at least one portion of the optical unit and/or the temperature adjusting element extends and the optical axis of the optical unit may be between 0° and 10°, between 0° and 7° or between 0° and 5°, e.g., for a reduction of back-reflection into the fiber and/or the optical chip. The optical axis of the optical unit may be defined by a main receiving or main transmitting direction of the optical unit, i.e., a direction along which a reception efficiency or a transmission amplitude of the optical unit is maximum. For example, the optical axis of the optical unit coincides with at least a portion of the optical path along which light propagates between the ending of the optical fiber and the optical unit.

Moreover, the ending of the optical fiber may be tapered and/or may comprise a lens to form an optical output and/or input coupler. A tapered ending of the optical fiber in particular has a decreasing cross section (e.g., diameter) towards an end surface (outcoupling and/or incoupling surface) of the ending. The optical fiber may be a single mode fiber. According to another embodiment, the optical coupling assembly comprises a plurality of optical fibers (a fiber array), wherein each of these may be a single mode fiber. The free-beam regions thus may contain a plurality of parallel optical paths. The fiber holder may be configured to mount the plurality of optical fibers.

The free beam region may not extend over the entire optical path between the ending of the optical fiber and the optical unit. Rather, only a portion of the optical path between the ending of the optical fiber and the optical unit may constitute a free beam region. The length of the free beam region may be between 5 µm and 75 µm.

The optical unit may be a photodiode and/or an optical transmitter (such as a laser, e.g., a VCSEL). The temperature adjusting element may be configured to cool and/or heat the optical unit. For example, the temperature adjusting element is a thermoelectric element such as a thermoelectric cooler (TEC).

The optical fiber may be fixed to the fiber holder, e.g. bonded, for example by means of a glue. The fiber holder may comprise at least one mounting structure (such as a feed through opening for receiving the ending of the optical fiber). Further, the fiber holder may comprise a beam forming element (e.g., a lens) for forming a light beam produced by the optical unit or to be received by the optical unit.

According to an embodiment of the invention, the optical unit comprises an optical chip. The optical chip, in turn, may comprise optical and/or electronic elements such as optical waveguides, electric circuitry and/or electro-optic components. The optical chip may form a photodiode or an optical transmitter as set out above. Further, the optical chip may be arranged on a (e.g., flat) carrier such as a (e.g. ceramic or semiconductor) substrate. The carrier may be part of a sub-assembly.

The fiber holder may be bonded to at least one portion of the optical chip and/or to the carrier (if such a carrier is present). That is, the portion or the plurality of portions of the optical unit to which the fiber holder is bonded may be formed by a portion (e.g. a surface portion) of the optical chip and/or the carrier. The fiber holder may be bonded only to the optical chip or only to the carrier (if present). However, it is also possible that the fiber holder is bonded to both a portion of the optical chip and a portion of the carrier. Additionally or alternatively, the fiber holder may be bonded to the temperature adjusting element. For example, the fiber holder is bonded to a plurality of portions of the optical unit and/or the temperature adjusting element in such a way that a change of the adjustment between the optical fiber (i.e., the ending of the optical fiber) and the optical unit is mitigated when a temperature gradient in the region of the optical unit and the fiber holder is changed by means of the temperature adjusting element. For example, the portions of the optical unit and/or the temperature adjusting element to which the fiber holder is bonded are located symmetrically with respect to the optical axis of the optical unit (e.g., in the same distance from the optical axis of the optical unit). Moreover, the fiber holder may have a symmetric shape (e.g. axis or rotation symmetry).

The optical coupling assembly according to the invention may further comprise a housing in which the optical unit, the temperature adjusting element and the fiber holder are located. The housing may comprise a feed through opening for the optical fiber. Optionally, at least one further feed through opening in the housing may be provided to feed through electrical contacts and/or a module cover. The housing may form a hermetic closure, e.g., in order to avoid exposure of the components within the housing to moisture. Moreover, the optical coupling assembly may form a module connectable to other components.

Moreover, the optical unit may be mounted to a surface of the temperature adjusting element, the surface of the temperature adjusting element extending perpendicular or at angle to the axis of the optical unit. It is, however, also possible that the optical unit is mounted to a surface of the temperature adjusting element that extends parallel to the optical axis of the optical unit.

According to another embodiment of the invention, the fiber holder comprises a first and a second lateral portion and a middle portion connecting the first and the second lateral portion, wherein the first lateral portion and the second lateral portion are bonded to different portions of the optical unit and/or the temperature adjusting element and the middle portion spans across the optical unit. In particular, the fiber holder may have a U-shape in cross section, the first and the second lateral portion forming the legs of the U-shape. For example, the fiber holder extends along a main extension direction (e.g., perpendicular to the optical axis of the optical unit) and has the mentioned U-shaped with respect to a cross-section perpendicular to the main extension direction. It is, however, also possible that the fiber holder has a rotationally symmetrical shape.

The optical fiber may be mounted to the middle portion, e.g., by bonding the ending of the optical fiber to a feed through opening located in the middle portion and/or using other (e.g., mechanical) attachment means. In particular, the position of the feed through opening is aligned with the optical axis of the optical unit. For example, the feed through opening is positioned in the center of the middle portion.

According to another embodiment, the optical fiber is mounted to the first lateral portion, the second lateral portion or an extension of the first or second lateral portion. In particular, the extension may be a continuation of the first and the second lateral portion, respectively, extending beyond the middle portion, i.e. extending on a side of the middle portion that faces away from the optical unit. The optical coupling assembly may comprise a deflecting element deflecting light emitted from the ending of optical fiber towards the optical unit and/or light emitted from the optical unit towards the ending of the optical fiber. For example, the deflecting element is configured to deflect light by 90°. The deflecting element may comprise a reflective structure, e.g., a mirror or any other structure having a surface coated with a reflecting material.

The optical coupling assembly may further comprise a strain relief device different from the fiber holder and arranged in a distance from the temperature adjusting element. The strain relief device may also be arranged in a distance from the fiber holder. For example, the strain relief device is connected to the housing of the optical coupling assembly (if such housing is present) such that at least some of the force exerted on the optical fiber may be dissipated into the housing. The strain relief device may be arranged adjacent a feed through opening of the housing through which the optical fiber is introduced. The length of the portion of the optical fiber that extends within the housing may be chosen in such a way that a thermal load (e.g., strain) impacting on a portion of the optical fiber between the strain relief device and the fiber holder are compensated. For example, the length of the portion of the optical fiber that extends within the housing is at least 3 mm or at least 5 mm.

Embodiments of the invention will be described below with reference to the drawings. The drawings show:
- Fig. 1: a cross-section of an optical coupling assembly according to a first embodiment of the invention;
- Fig. 2: a cross-section of an optical coupling assembly according to a second embodiment of the invention; and
- Fig. 3: a cross-section of an optical coupling assembly according to a third embodiment of the invention.

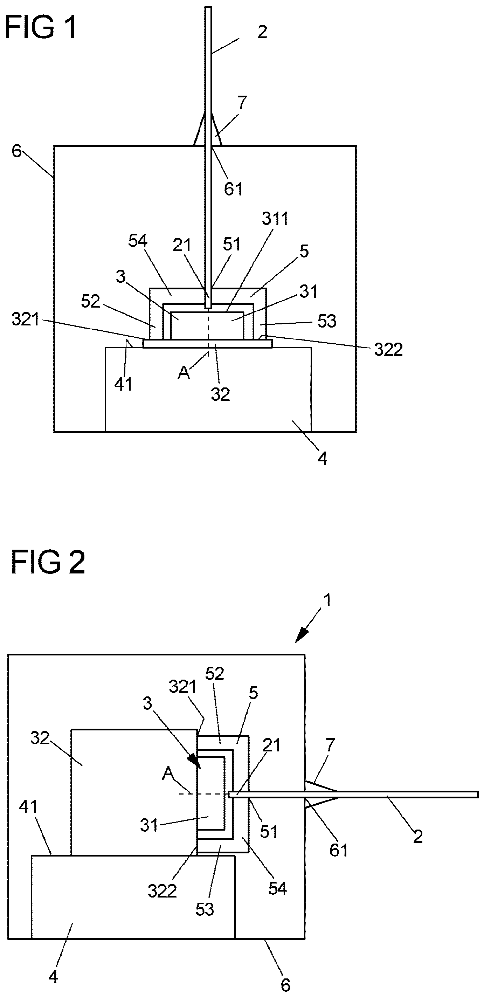

The optical coupling assembly 1 depicted in figure 1 comprises an optical fiber 2 and an optical unit 3, the optical unit 3 comprising an optical chip 31 for receiving light from the optical fiber 2 and/or for emitting light to be coupled into the optical fiber 2. The optical chip 31 is arranged on a carrier 32 of the optical unit 3. For example, the optical chip 31 is bonded to the carrier 32. Further, the optical unit 3 is arranged on a temperature adjusting element in the form of a TEC 4, wherein the carrier 32 may be bonded to the TEC 4. The TEC 4 can be operated to cool the optical unit 3. However, it is also possible that the TEC 4 (or another thermoelectric element) may be operated to heat (or to cool and to heat) the optical unit 3.

Moreover, the applicable coupling assembly 1 comprises a fiber holder 5 on which an ending 21 of the optical fiber 2 is mounted. More particularly, the ending 21 is fed through a feed through opening 51 of the fiber holder 5 and may be attached (e.g., bonded) to the fiber holder 5 in the region of and/or to the feed through opening 51. The ending 21 of the optical fiber 2 to is attached to the fiber holder 5 in such a way that a gap is formed between the ending 21 (e.g., an end surface of the ending) and an upper receiving or transmitting surface 311 of the optical chip 31. The gap between the ending 21 and the transmitting surface 311 provides a free beam region through which a light beam emitted from the ending 21 of the optical fiber 2 propagates towards the optical chip 31 and/or light beam emitted from the optical chip 31 propagates towards the ending 21 of the optical fiber 2. The ending 21 of the optical fiber 2 may be tapered and/or comprise a beam forming element (e.g., a lens).

The fiber holder 5 has a U-shaped cross-section comprising a first and a second lateral portion 52, 53 and a middle portion 54 connecting the first and a second lateral portion 52, 53. The fiber holder 5 may be a single piece, i.e., the first and a second lateral portion 52, 53 and a middle portion 54 are integrally formed. The first and a second lateral portion 52, 53 are bonded to surface portions 321, 322 of the carrier 32, the surface portions 321, 322 being located on opposite sides of the optical chip 31. The surface portions 321, 322 are located in a plane extending perpendicular to an optical axis A of the optical chip 31. The optical axis of the optical chip 31 corresponds to the optical axis of the optical unit 3 and is aligned with the orientation of the ending 21 of the optical fiber 2. The fiber holder 5 may have an elongated design, i.e., it may extend along a main extension direction (oriented perpendicularly to the drawing plane of figure 1), having a U-shaped cross-section plane perpendicular to the main extension direction as set out above. The feed through opening 51 of the fiber holder 5 is disposed in the middle portion 54.

The surface portions 321, 322 of the carrier 32 to which the first and a second lateral portion 52, 53 are bonded are located symmetrically with respect to optical axis A. Because of this symmetric arrangement of the surface portions 321, 322 the alignment between optical fiber ending 21 and the optical chip 31 may be maintained even when temperature changes of the optical chip 31 and/or the carrier 32 are generated by operating the TEC 4. The mitigation of alignment changes due to temperature changes may be further supported by the symmetric design of the fiber holder 5. Other arrangements of the fiber holder 5 than shown in fig. 1 are possible. For example, the fiber holder 5 may not be exclusively attached to the carrier 32. Rather, at least one of the first and the second lateral portion may be attached to the optical chip 31 or TEC 4.

The optical coupling assembly 1 further comprises a housing 6 encompassing a portion of the optical fiber 2 (including fiber ending 21), the optical unit 3, the TEC 4 and the fiber holder 5. The housing 6 may provide a hermetically sealed interior space in which these components are located. Further, a strain relief device 7 is arranged at the housing 6, the strain relief device 7 interacting with the optical fiber 2 and configured to dissipate at least a portion of a mechanical force exerted on the optical fiber 2 into the housing 6. More particularly, the strain relief device 7 is connected to a portion of the optical fiber 2 and to the housing 6. Moreover, the strain relief device 7 is arranged adjacent a feed through opening 61 of the housing 6 such that the optical fiber 2 passes through both the strain relief device 7 and the feed through opening 61.

Figure 2 illustrates another embodiment of the optical coupling assembly 1. This embodiment corresponds to the one of figure 1, wherein, however, the optical unit 3 is rotated by 90°. That is, according to the embodiment of figure 2, the carrier 32 of the optical unit 3 is arranged on a surface 41 of TEC 4 which is parallel to the optical axis A of the optical unit 3, while according to figure 1, the carrier 32 of the optical unit 3 is arranged on a surface 41 of TEC 4 which is perpendicular to the optical axis A. The carrier 32 has a greater thickness (measured in the direction of the optical axis A) in figure 2 than in figure 1. As to the remaining features it is referred to the explanations above in conjunction with figure 1.

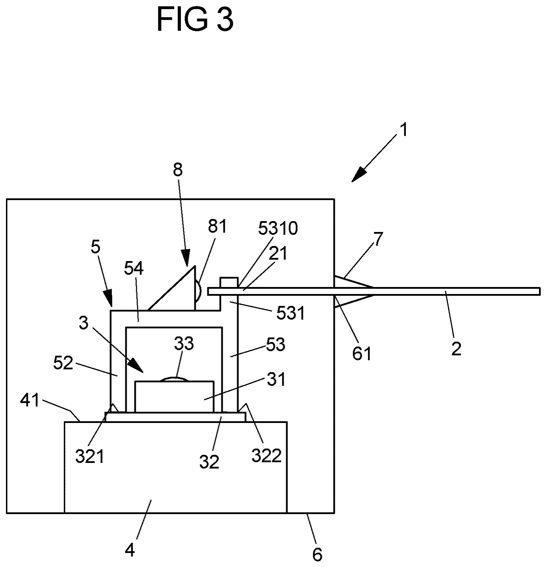

Figure 3 is related to another modification of the first embodiment. As in figure 1, the fiber holder 5 comprises lateral portions 52, 53 attached to surface portions 321, 322 of carrier 32, extending in a plane perpendicular to the optical axis A of the optical unit 3. However, the optical fiber 2, in particular its ending 21, extends parallel to the carrier 32. The fiber holder 5 comprises an extension 531 of the second lateral portion 52, the extension 531 comprising a feed through opening 5310 to which the ending 21 of the optical fiber to is mounted. The extension 531 protrudes from the second lateral portion 52 beyond the middle portion 54 and is located on a side of the middle portion 52 that faces away from the optical unit 3. Moreover, as already pointed out above, the ending 21 of the optical fiber 2 may be tapered and/or comprise a focusing element such as a lens.

In order to receive light from the ending 21 of the optical fiber 2 at the optical chip 31 and/or to transmit light from the optical chip 31 towards the ending 21 of the optical fiber 2, the optical coupling assembly 1 comprises a deflecting device 8 arranged within the interior of housing 6 and configured to deflect light (e.g., by 90°). The ending 21 of the optical fiber 2 is arranged in a distance to the deflecting device 8 such that a first free beam region is present between the ending 21 of the optical fiber 2 and the deflecting device 8. Another free beam region exists between the deflecting device 8 and the optical unit 3. The deflecting device 8 may comprise at least one reflective surface. Optionally, the deflecting device 8 comprises a lens 81. Also the optical unit 3 comprises a lens 33 arranged on top of the optical chip 31 to improve coupling into or out of the optical chip 31. A similar lens may be provided for the optical coupling assemblies of figures 1 and 2. However, the lens 33 is only optional.

## Claims

1. An optical coupling assembly (1), comprising
- at least one optical fiber (2);
- an optical unit (3) configured to receive light from the optical fiber (2) and/or to emit light to be coupled into the optical fiber (2);
- a temperature adjusting element (4) configured to adjust a temperature of the optical unit (3);
- at least one fiber holder (5) on which the optical fiber (2) is mounted in such way that a at least a portion of an optical path between an ending (21) of the optical fiber (2) and the optical unit (3) is a free beam region,
- wherein the fiber holder (5) is bonded to at least one portion of the optical unit (3) and/or the temperature adjusting element (4), the at least one portion extending along or in a plane which is orientated perpendicular or obliquely at angle to an optical axis (A) of the optical unit (3).

2. The optical coupling assembly of claim 1, wherein the fiber holder (5) is bonded to a plurality of portions of the optical unit (3) and/or the temperature adjusting element (4), all of the plurality of portions extending along or in the plane which is orientated perpendicular or at angle to an optical axis (A) of the optical unit (3).

3. The optical coupling assembly of claims 1 or 2, wherein the angle between a normal of the plane and the optical axis is between 0° and 10°, between 0° and 7° or between 0° and 5°.

4. The optical coupling assembly of any of the preceding claims, wherein the ending (21) of the optical fiber (2) is tapered and/or comprises a lens to form an optical output or input coupler.

5. The optical coupling assembly of any of the preceding claims, wherein the optical unit (3) comprises an optical chip (31) arranged on a carrier (32).

6. The optical coupling assembly of claim 5, wherein the fiber holder (5) is bonded to at least one portion of the optical chip (3).

7. The optical coupling assembly of claim 5 or 6, wherein the fiber holder (5) is bonded to at least one portion (321, 322) of the carrier (32).

8. The optical coupling assembly of any of the preceding claims, wherein the fiber holder (5) is bonded to a plurality of portions of the optical unit (3) and/or the temperature adjusting element (4), the portions being located symmetrically with respect to the optical axis (A) of the optical unit (3).

9. The optical coupling assembly of any of the preceding claims, wherein the optical unit (3) is mounted to a surface (41) of the temperature adjusting element (4), the surface (41) of the temperature adjusting element (4) extending perpendicular or at angle to the optical axis (A) of the optical unit (3).

10. The optical coupling assembly of any of claims 1 to 8, wherein the optical unit (3) is mounted to a surface (41) of the temperature adjusting element (4) that extends parallel to the optical axis (A) of the optical unit (3).

11. The optical coupling assembly of any of the preceding claims, wherein the fiber holder (5) comprises a first and a second lateral portion (52, 53) and a middle portion (54) connecting the first and the second lateral portion (52, 53), wherein the first lateral portion (52) and the second lateral portion (53) are bonded to different portions (321, 322) of the optical unit (3) and/or the temperature adjusting element (4), and wherein the middle portion spans (54) across the optical unit (3).

12. The optical coupling assembly of claim 11, wherein the optical fiber (2) is mounted to the middle portion (54).

13. The optical coupling assembly of claim 11, wherein the optical fiber (2) is mounted to the first lateral portion (52), the second lateral portion (53) or an extension (531) of the first or second lateral portion (52, 53).

14. The optical coupling assembly of any of the preceding claims, further comprising a deflecting device (8) deflecting light emitted from the ending (21) of optical fiber (2) towards the optical unit (3) and/or light emitted from the optical unit (3) towards the ending (21) of the optical fiber (2).

15. The optical coupling assembly of any of the preceding claims, further comprising a strain relief device (7) different from the fiber holder (5) and arranged in a distance from the temperature adjusting element (4).
